# EUROPÄISCHE PATENTANMELDUNG

(11) **EP 0 872 994 A1**
(43) Veröffentlichungstag der Anmeldung: **21.10.1998**
(21) Anmeldenummer: 98810225.7
(22) Anmeldetag: 17.03.1998
(51) Int. Cl.: H04M 1/00, H04M 1/274

(54) **Vorrichtung mit einem berührungsempfindlichen Bildschirm**

(30) Priorität: 18.04.1997 CH 906/97
(71) Anmelder: ASCOM BUSINESS SYSTEMS AG, CH-4503 Solothurn (CH)
(72) Erfinder: Iseli, Martin, 3012 Bern (CH); Schwarz Raacke, Susanne, 4500 Solothurn (CH)
(74) Vertreter: Roshardt, Werner Alfred, Dipl.-Phys.

(57) **Zusammenfassung**

Ein Telefonendgerät hat einen berührungsempfindlichen Bildschirm für die Bedienung auf der Basis einer programmierten Menüstruktur. Der Bildschirm zeichnet sich durch eine fest vorgegebene Aufteilung in drei Bereiche (8, 9, 10) aus. Ein ersterbalkenförmiger Randbereich (8) hat eine Mehrzahl von statischen Menüpunkten. Ein zweiter balkenförmiger Randbereich (9) enthält eine Mehrzahl von dynamischen Menüpunkten. Der dritte Bereich ist ein grossflächiger Arbeitsbereich (10), der die konkret auszuführende Funktion in Abhängigkeit von den dynamischen Menüpunkten des zweiten Randbereiches (9) enthält. Beim Betätigen einer Hilfetaste werden zu allen auf dem Bildschirm angezeigten statischen und dynamischen Menüpunkten gleichzeitig erläuternde Informationen angezeigt.

## Beschreibung

### Technisches Gebiet

Die Erfindung betrifft eine Vorrichtung mit einem berührungsempfindlichen Bildschirm für die Bedienung auf der Basis einer programmierten Menüstruktur.

### Stand der Technik

Moderne Telefonendgeräte enthalten eine Vielzahl von Funktionen. Diese gehen weit über das hinaus, was bei einfachen konventionellen Geräten möglich war. Der Zugriff auf die Funktionen erfolgt zum einen Teil über Zusatz- und zum anderen Teil über Umschalttasten. Die Anzahl der Zusatztasten ist durch den Platz auf der Oberfläche des Geräts beschränkt. Im übrigen sollen die Tasten nicht allzu klein sein, damit sie von jedermann problemlos betätigt werden können. Die Verwendung von Umschalttasten ermöglicht es, den bestehenden Tasten mehrere Funktionen zuzuordnen. Allerdings wird die Bedienung des Telefons dadurch kompliziert. Der Benutzer muss wissen, welche Tastenkombinationen für die gewünschte Funktion zu wählen sind. In der Praxis führt das dazu, dass nur ein geringer Teil der Möglichkeiten des Geräts genutzt wird.

Aus der Publikation IEEE Communications Magazine, February 1985, Vol. 23, No. 2, pp. 21-27, "An Interactive Touch Phone for Office Automation", To Russell Hsing et al., ist ein Telefon bekannt, welches anstelle von mechanischen Tasten einen berührungsempfindlichen Bildschirm (Touch-Screen) hat. Auf diesem Bildschirm können verschiedene Menüs angezeigt werden. In jedem Menü sind Tasten bzw. Berührungsfelder angezeigt, welche vom Benutzer betätigt werden können.

Die GB 2 276 520 beschreibt ein Telefon mit einem angeschlossenen berührungsempfindlichen Bildschirm zur menügesteuerten Bedienung des Gerätes. Am rechten Rand des Bildschirms sind mehrere stets sichtbare Icons angeordnet. In Abhängigkeit vom gewählten Icon erscheinen in der rechten Hälfte des Bildschirms unterschiedliche Eingabe-Darstellungen (beispielsweise zum Suchen von Einträgen im Telefonbuch, zum Eingeben eines Eintrages in das interne Register, zum Speichern von Notizen, zum Abrufen der Wetterkarten usw.). Ähnliche Bedienungsoberflächen sind auch aus anderen Veröffentlichungen bekannt (z.B. EP 0 748 139 A2/Nokia, EP 0 526 729 A2/ Texas Instruments, EP 0 651 544 A2/IBM) Die komplexen Eingabemöglichkeiten machen es einem durchschnittlichen Telefonbenutzer schwer, sich mit geringem Aufwand zurecht zu finden.

Aus der WO 92/17850 (Deneb Robotics) ist eine insbesondere für CAD-Anwendungen geeignete Benutzeroberfläche bekannt, bei welcher am oberen, seitlichen und unteren Rand Funktionstasten angezeigt sind, welche ständig sichtbar sind. In Abhängigkeit von der Auswahl einer der Tasten am oberen Rand ändert sich die Bedeutung bzw. Funktion der am rechten vertikalen Rand angezeigten Tasten. Dergrosse zentrale Arbeitsbereich dient zum Anzeigen und Erstellen der Konstruktionszeichnung.

Die bekannten Touch-Screen Telefone (auch Touch-Phone genannt) haben zwar gegenüber den Geräten ohne grossflächigen Bildschirm einen höheren Komfort und stark erweiterte Funktionen. Eine genauere Analyse zeigt jedoch, dass auch diese für den Durchschnittsverbraucher zu wenig durchschaubar sind.

### Darstellung der Erfindung

Aufgabe der Erfindung ist es, ein Telefonendgerät der eingangs genannten Art anzugeben, das sich ohne umfangreiche Bedienungsanleitung verstehen und in allen Funktionen bedienen lässt.

Die Lösung der Aufgabe ist durch die Merkmale des Anspruchs 1 definiert. Gemäss der Erfindung sind alle Menüpunkte in den fest vorgegebenen Randbereichen plaziert. Beim Betätigen einer Hilfetaste (welche als Software- oderHardware-Taste ausgeführt sein kann) werden im wesentlichen zu allen auf dem Bildschirm angezeigten statischen und dynamischen Menüpunkten gleichzeitig erläuternde Informationen angezeigt.

Die erfindungsgemässe Hilfetaste zeichnet sich dadurch aus, dass deren Betätigung unmittelbar zu einem "Ergebnis" führt. Der Benutzer muss sich also nicht durch eine aufgegliederte Hilfe-Information hindurcharbeiten. Das Verständnis wird erleichtert und beschleunigt.

Wichtig ist, dass die Menüpunkte nicht beliebig auf den Bildschirm verteilt, sondern möglichst in einer einfachen Reihe nebeneinander bzw. untereinander am Rand angeordnet sind. Die Hilfe-Informationen werden im grossen zentralen Bereich angezeigt. Texte, die nicht unmittelbar neben den entsprechenden Menüpunkten plaziert werden können, können mit Pfeilen und Verbindungslinien zugeordnet werden.

Gemäss einer bevorzugten Ausführungsform werden die erläuternden Informationen nur solange angezeigt, wie der Benutzer die Hilfetaste gedrückt hält. Zum Verlassen der Hilfe-Funktion müssen also keine zusätzlichen Tasten betätigt werden. Sobald der Benutzer den Finger von der Hilfetaste wegnimmt, kann die ordentliche Bedienung der Vorrichtung fortgesetzt werden.

Gemäss der Erfindung hat der Bildschirm eine fest vorgegebene Aufteilung in drei Bereiche. D.h. die Begrenzung dieser Bereiche ist statisch vorgegeben und es ändern nur die Inhalte. Der erste Bereich ist ein balkenförmiger Randbereich, in welchem eine Mehrzahl von statischen Basis-Menüpunkten angezeigt ist. Der zweite Bereich ist ein zweiter balkenförmiger Randbereich. Dieser enthält - im Unterschied zum ersten Randbereich - eine Mehrzahl von zu einem ausgewählten Basis-Menüpunkt untergeordneten dynamischen Menüpunkten. Schliesslich ist noch ein grossflächiger Arbeitsbereich vorgegeben. In diesem werden die konkret auszuführenden Funktionen in Abhängigkeit von den angewähiten Menüpunkten der beiden Randbereiche angeboten bzw. ausgeführt.

Aufgrund der erfindungsgemässen Gestaltung der Bedienungsoberfläche hat der Benutzer stets die volle Übersicht. Es gibt keine tief verzweigten Baumstrukturen, in welchen sich der Benutzer verirren kann. Aufgrund der stets sichtbaren Randbereiche weiss der Benutzer immer, wo er steht. Er kann auch direkt zu einem anderen Menüpunkt springen und braucht sich nicht mühsam in einer Hierarchie nach oben und dann wieder nach unten zu bewegen.

Gemäss einer bevorzugten Ausführungsform ist der erste Randbereich ein Balken, der sich über den ganzen oberen oder unteren Rand des Bildschirms erstreckt. Der zweite Randbereich seinerseits erstreckt sich über den linken oder rechten Rand. Die Benutzeroberfläche erhält dadurch eine zweidimensionale Auffächerung: Die Menüpunkte des horizontalen Randbereiches bilden die oberste Hierarchie und sind anordnungsmässig deutlich getrennt von der nächst tieferen Menüebene, welche auf dem seitlich angeordneten vertikalen Randbereich angezeigt ist.

Es ist natürlich nicht ausgeschlossen, dass der erste und der zweite Randbereich in einer anderen Weise plaziert sind (z.B. nebeneinander oder untereinander). Für die Übersichtlichkeit der Bedienungsoberfläche ist es wichtig, dass die verschiedenen Bereiche visuell gut sichtbar voneinander getrennt bzw. abgesetzt sind.

Die Randbereiche sind z.B. entsprechend einem statischen Raster in Felder unterteilt. Jedes dieser Felder ist eine mögliche Taste (Touch-Screen-Taste). Als Taste beschriftet und betätigbar sind aber nur so viele Felder, wie in einem bestimmten Fall gebraucht werden. Beim zweiten Randbereich ändert die Beschriftung der Felder entsprechend den dynamisch allozierten Menüpunkten. Bei dieser Ausführungsform besteht eine vorteilhafte Kombination zwischen statischen und dynamischen Elementen: Statisch ist im wesentlichen die Aufteilung des Bildschirms, dynamisch dagegen der Inhalt gewisser Bereiche und Felder. Dies hat den Vorteil, dass der Benutzer unabhängig von der Menüstruktur bzw. den konkreten Funktionen einen festen Raster als Orientierungshilfe vor sich hat. Es ist also nicht so, dass der Bildschirm von Menü zu Menü beliebig oder sogar vollständig ändert.

Vorzugsweise sind die Randbereiche relativ schmal gehalten. D.h. es soll gerade genügend Platz für bequem bedienbare Touch-Screen-Tasten vorhanden sein. In diesem Sinn sollte die Breite mindestens 1 - 1.5 cm betragen. Für die Arbeitsfläche (Arbeitsbereich) sollte ein Bereich von 10x10 cm² verbleiben. Die Touch-Screen-Tasten in den beiden Randbereichen sind aus Platzgründen z.B. nur mit Symbolen (Piktogrammen) beschriftet. Eine einfache Möglichkeit, dem Benutzer die Bedeutung eines bestimmten Symbols in Erinnerung zu rufen besteht darin, beim Berühren einer Taste deren Funktion im Klartext anzuzeigen. Es kann z.B. im Zentrum des Bildschirms eine entsprechende Mitteilung eingeblendet werden, welche solange angezeigt wird, wie die entsprechende Touch-Screen-Taste gedrückt wird. Der Klartext kann auch in einer Fly-out-Fahne zur fraglichen Taste gezeigt werden. Der Grundgedanke dieser Ausführungsform liegt darin, für die Beschriftung der in den Randbereichen angeordneten Tasten bzw. Felder möglichst wenig Platz zu verwenden, dem Benutzer aber trotzdem ein einfaches Hilfsmittel zur Erläuterung der zugeordneten Funktionen zur Verfügung zu stellen. Detaillierte Informationen über die verschiedenen Funktionen kann der Benutzer mit einer speziell dafür vorgesehenen Hilfetaste abrufen.

Ein weiteres Hilfsmittel zur Unterstützung des Benutzers und zur Erhöhung der Übersichtlichkeit der Bedienung ist die Markierung der gewählten Menüpunkte. D.h. in den Randbereichen ist jeweils diejenige Touch-Screen-Taste farblich oder intensitätsmässig hervorgehoben, welche aktiv ist.

Eine weitere Massnahme zur Verbesserung der Übersichtlichkeit besteht darin, pro Randbereich höchstens sieben Menüpunkte vorzusehen. Diese können in einer Reihe nebeneinander bzw. übereinander angeordnet werden. Namentlich beim zweiten Randbereich mit den dynamischen Menüpunkten ist es von Vorteil, wenn gleiche bzw. ähnliche Funktionen stets am selben Ort angezeigt werden. So soll z.B. eine Hilfe-Taste stets am gleichen Ort plaziert sein.

Handelt es sich bei der Vorrichtung um ein Komforttelefon, so enthält der erste Randbereich gemäss einem bevorzugten Ausführungsbeispiel höchstens folgende Basis-Menüpunkte: "Zielwahl", "Nummernwahl", "Telefonbeantworter", "Bankdienstleistungen", "Notizen", "Einstellungen".

"Zielwahl" bedeutet, dass ein Register mit abgespeicherten Namen und Nummern angezeigt wird, wobei die Verbindung durch Antippen des Namens hergestellt wird.

"Nummernwahl" bedeutet das konventionelle Wählen einer Verbindung durch Eingeben der Telefonnummer.

"Telefonbeantworter" erlaubt die Bedienung und Programmierung eines im Telefonapparat integrierten automatischen Telefonbeantworters.

"Notizen" erlaubt das Abspeichern von beliebigen Mitteilungen für den späteren eigenen Bedarf bzw. zur Information an einen anderen Benutzer desselben Telefonendgeräts. Die vorliegende Funktion braucht nicht von lokaler Natur zu sein. Es ist z.B. denkbar, dass kompatible Geräte mittels eines entsprechenden Dienstes des Netzwerkes (z.B. E-mail-Dienst, Internet-E-mail) Mitteilungen austauschen können. Solche Mitteilungen könnten unter der Funktion "Notizen" abgerufen bzw. erstellt und übertragen werden.

"Bankdienstleistungen" schafft die Verbindung mit dem Computer der eigenen Bank zur Vornahme von Transaktionen. "Einstellungen" schliesslich erlaubt das Konfigurieren des Geräts (z.B. Einstellen der Sprache, der Farben des Bildschirms und insbesondere des priorisierten Grundmenüs, Wahl der Beschriftungsart der Tasten, z.B. "Klartext"/"Symbole").

Neben den soeben aufgezählten Funktionen gibt es diverse andere, die - nach Bedarf zusätzlich oder alternativ - vorgesehen sein können. Zu erwähnen ist z.B.: "Rechner", "Uhr", "Wecker".

Im Modus "Zielwahl programmieren" bzw. "Zielwahl ändern" wird die Arbeitsfläche automatisch in zwei Hälften aufgeteilt. In der einen Hälfte werden die Einträge desZielwahlregisters (d.h. Name und Telefonnummer) und in der anderen eine alphabetische oder Zehnertastatur angezeigt und zwar in Abhängigkeit davon, ob der Benutzer einen Namen oder eine Telefonnummer berührt hat. Dadurch wird die Eingabe einer Änderung bzw. Ergänzung vereinfacht. Die Anzahl der zu betätigenden Tasten wird reduziert.

Beim Telefonendgerät handelt es sich vorzugsweise um eine Tischstation mit einem Bildschirm, welcher im wesentlichen die gesamte Oberseite des Geräts einnimmt. Die Erfindung kann im Prinzip auch bei einem Schnurlostelefon oder einem Handfunktelefon angewendet werden. Allerdings wird dort der Bildschirm in der Regel eine sehr beschränkte Grösse haben (da das Handgerät selbst nicht besonders gross ist). Folglich wird auch relativ wenig Platz auf dem Touch-Screen-Bildschirm zur Verfügung stehen (die Touch-Screen-Tasten dürfen eine minimale Grösse nicht unterschreiten).

Gemäss einer besonders bevorzugten Ausführungsform hat das erwähnte Komforttelefon - abgesehen von einem Schalter bzw. einer Taste zum Ein- und Ausschalten des Geräts - keine physisch bewegbaren Tasten (Hardware-Tasten).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische, perspektivische Darstellung einer Tischstation;
- Fig. 2a-2f: Darstellungen verschiedener Bildschirmanzeigen;

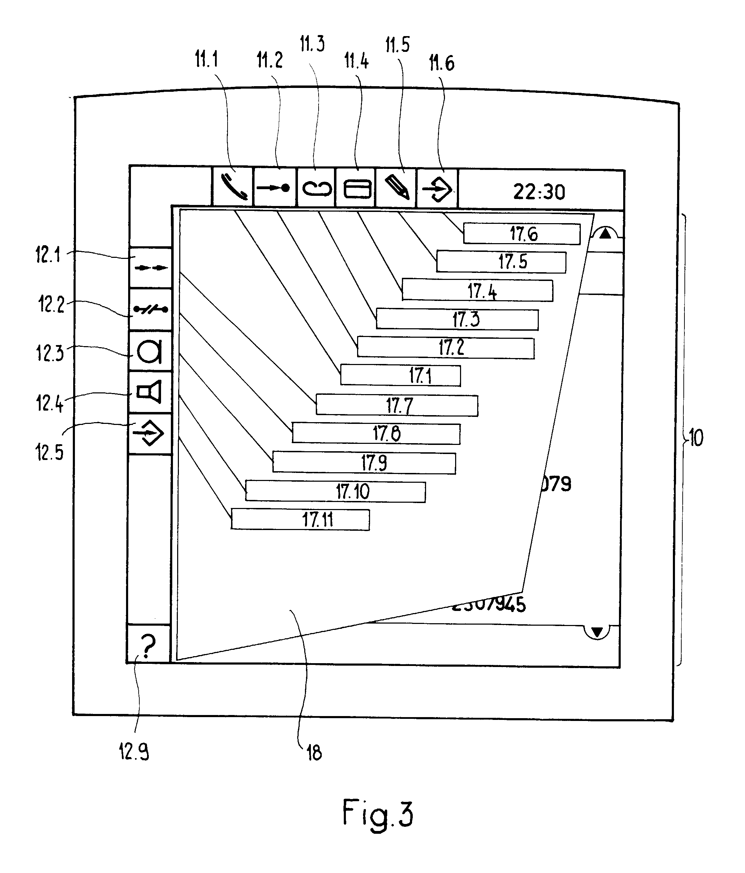

- Fig. 3: Darstellung einer Bildschirmanzeige beim Betätigen der Hilfetaste.

Grundsätzlich sind in den Figuren gleiche Teile mit gleichen Bezugszeichen versehen.

### Wege zur Ausführung der Erfindung

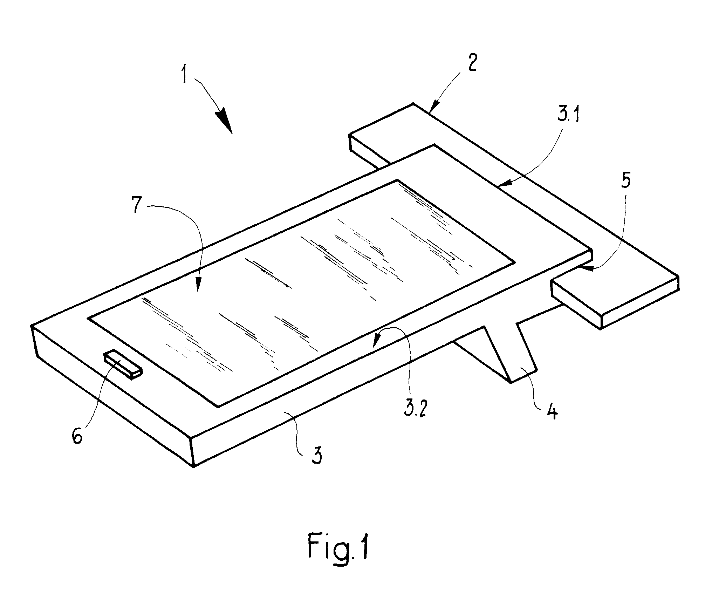

In Fig. 1 ist eine erfindungsgemässe Tischstation 1 dargestellt. Sie hat ein im wesentlichen flaches Gehäuse 3 mit einem Fuss 4 im hinteren Bereich der Unterseite des Gehäuses 3. Die Oberseite 3.2 des Gehäuses 3 hat somit eine für die Bedienung angenehme Schrägstellung.

An der Hinterseite 3.1 ist eine Mulde bzw. ein Schlitz 5 ausgebildet. Er erstreckt sich über die ganze Breite des Gehäuses 3 und ist dazu bestimmt, den Hörer 2 aufzunehmen. Im Schlitz 5 ist zudem ein Gabelschalter vorgesehen, welcher bei eingesetztem Hörer 2 die Telefonleitung unterbricht.

Der grösste Teil der Oberseite 3.2 ist durch einen berührungsempfindlichen Bildschirm 7 eingenommen. Dieser hat z.B. eine Grösse von 12x12 cm². Am beispielsweise unteren Rand des Bildschirms 7 ist eine Taste 6 zum Ein- und Ausschalten des Telefons vorgesehen. Ansonsten gibt es keine Hardware-Tasten. Die Bedienung des Telefons erfolgt also allein über die auf dem Bildschirm 7 angezeigte Benutzeroberfläche.

Technisch gesehen werden durch ein fest abgespeichertes Programm auf dem Bildschirm Eingabe- bzw. Bedienungsfunktionen zur Anzeige gebracht, welche vom Benutzer durch Berührung der entsprechenden Stelle des Bildschirms ausgewählt werden können. Mit Hilfe der auf der Oberfläche des Bildschirms angeordneten berührungsempfindlichen Matrix kann das Programm die ausgewählte Funktion ermitteln und die Hardware zur Ausgabe der entsprechenden Signale (z.B. Tonwahl-Signale) an das Telefonnetzwerk bzw. die Zentrale (PSTN, PBX) ansteuern. Die nachfolgenden Darstellungen werden also durch das Zusammenwirken einer spezifischen Software mit einer geeigneten Hardware erzeugt. Die Entwicklung der zugrunde liegenden Programme liegt im Rahmen des fachmännischen Handelns und bedarf daher keiner näheren Erläuterung.

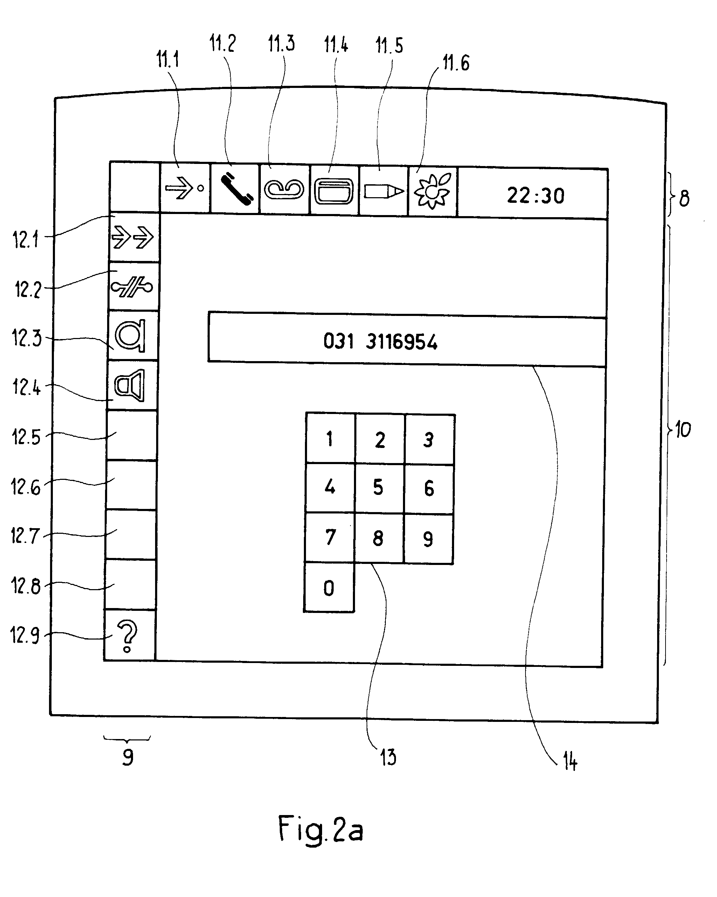

Anhand der Fig. 2a bis 2f soll nun diese Benutzeroberfläche beispielhaft erläutert werden. Dargestellt ist jeweils eine Draufsicht auf die Tischstation 1. Der (in den Figuren rahmenartige) Rand der Darstellung wird also durch das Gehäuse 3 gebildet.

Gemäss der Erfindung ist die gesamte Fläche des Bildschirms in drei Bereiche aufgeteilt. Am oberen Rand ist ein erster balkenförmiger Randbereich 8 vorgesehen. Er erstreckt sich über die ganze Breite des Bildschirms 7 und hat selbst eine Breite von z.B. 1 - 1.5 cm. Am linken Rand des Bildschirms ist ein zweiterbalkenförmiger Randbereich 9 angezeigt. Er hat eine ähnliche Breite wie der erste Randbereich 8 und erstreckt sich über die ganze Länge des Bildschirms. Der restliche Teil des (im vorliegenden Fall quadratischen) Bildschirms ist eine grosse quadratische Arbeitsfläche 10. Sowohl die beiden Randbereiche 8, 9 als auch die Arbeitsfläche 10 ändern ihre Umrisse grundsätzlich nicht.

Der erste Randbereich 8 ist entsprechend einem Raster in Felder 11.1 bis 11.6 unterteilt. Jedes Feld stellt eine Taste dar. D.h. das Gerät reagiert, wenn der Benutzer eines der genannten Felder 11.1 bis 11.6 berührt. In jedem Feld 11.1 bis 11.6 ist ein Basis-Menüpunkt enthalten. Im vorliegenden Beispiel lauten die Basis-Menüpunkte wie folgt (von links nach rechts):
- Zielwahl
- Nummernwahl
- Telefonbeantworter
- Bankdienstleistungen
- Notizen
- Einstellungen

Eine wichtige Option des Menüpunktes "Einstellungen" ist die Wahl desjenigen Grundmenüs, das standardmässig angezeigt werden soll (priorisiertes Menü). D.h. das Telefon kann z.B. so programmiert werden, dass auf der Arbeitsfläche des Bildschirms nach jedem Gebrauch des Telefons das Register für die Zielwahl oder die aktuelle Uhrzeit angezeigt wird.

In Fig. 2a wurde das Symbol für die Nummernwahl (Feld 11.2) angetippt. Es ist deshalb hell markiert. Im Randbereich 9 werden automatisch die zur Nummernwahl gehörenden Menüpunkte angezeigt. Im vorliegenden Beispiel sind es vier (Wahlwiederholung, Hörer auflegen, Mikrofon stumm schalten, Lautsprecher einstellen). In der unteren linken Ecke ist zudem ein "?"-Feld 12.9 (Hilfe) vorgesehen, das eine Hilfe-Datei zur Erläuterung der aktuell zur Verfügung stehenden Funktionen aufruft.

Weiter ist zu erkennen, dass der linke Randbereich einen fest vorgegebenen Raster von neun Feldern 12.1 bis 12.9 hat. Die Belegung dieser Felder 12.1 bis 12.9 ist dynamisch, d.h. sie hängt z.B. vom gewählten Menüpunkt des Hauptmenüs ab. In der Darstellung gemäss Fig. 2a sind die vier Felder 12.5 bis 12.8 leer.

Auf der Arbeitsfläche 10 sind eine Zehnertastatur 13 und ein Anzeigefeld 14 dargestellt. Auf der Zehnertastatur 13 wird die gewünschte Nummer eingestellt. Diese wird im Anzeigefeld 14 zur Kontrolle angezeigt.

Beim Antippen des Feldes 12.1 (Wahlwiederholung) wird die zuletzt eingegebene Nummer angezeigt und gewählt. Die in Fig. 2a gezeigte Arbeitsfläche bleibt im wesentlichen die gleiche.

Wird z.B. das Feld 12.4 mit dem Lautsprechersymbol angewählt, dann erscheint auf der Arbeitsfläche 10 ein Lautstärkeregler, welcher beispielsweise über "+"- und "-"-Felder eingestellt werden kann. Falls ein Freisprechmikrofon eingebaut ist, kann dieses z.B. über das Feld 12.4 ein- und ausgeschaltet werden.

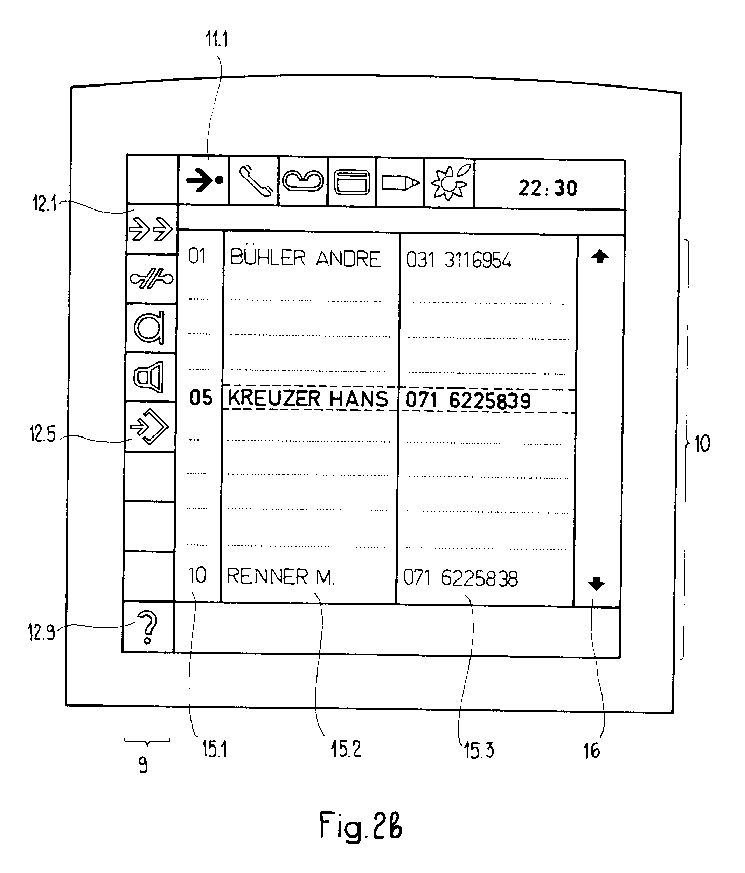

Fig. 2b zeigt den Bildschirm nach dem Antippen des Feldes 11.1 (Zielwahl). Der Inhalt des Randbereiches 9 wird dynamisch angepasst. Im vorliegenden Beispiel werden fünf Symbole angezeigt. Gegenüber dem Bildschirm gemäss Fig. 2a hat nur das Feld 12.5 geändert. Es ist nämlich nicht mehr leer, sondern bietet die Option "ändern" an. Wird keine der im linken Randbereich 9 angebotenen Optionen gewählt, dann sieht die Arbeitsfläche 10 wie dargestellt aus. D.h. es sind drei Spalten 15.1 bis 15.3 und ein Scroll-Balken 16 vorhanden. In der ersten Spalte 15.1 sind die Einträge mit fortlaufenden Nummern identifiziert. In der zweiten Spalte 15.2 sind die Namen und in der dritten die Telefonnummern angezeigt. Mit dem Scroll-Balken 16 ist es möglich, ein längeres Telefonregister zu durchsuchen.

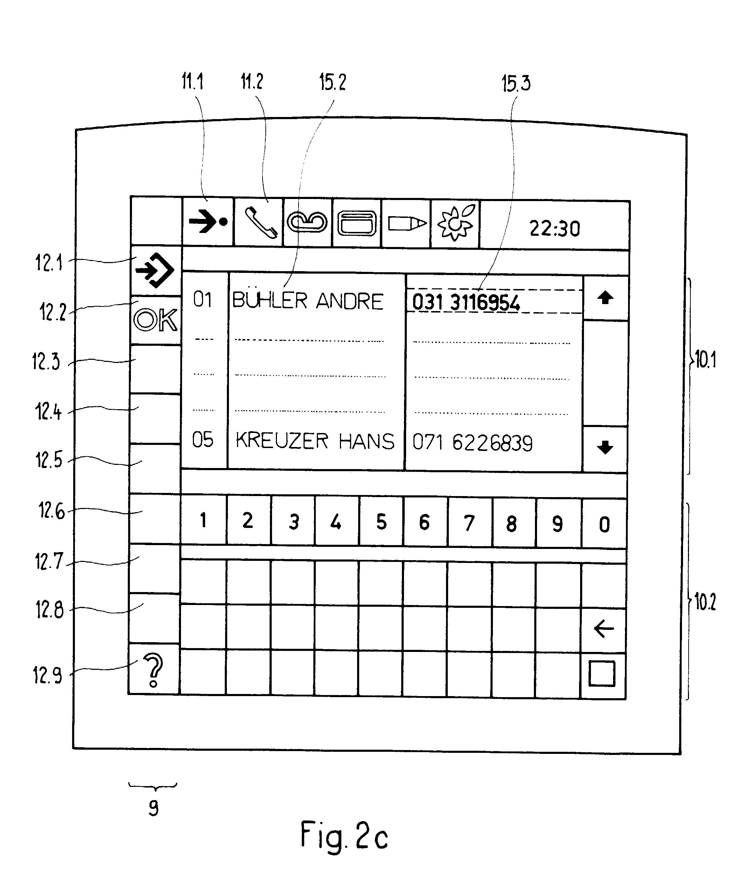

Fig. 2c zeigt den Bildschirm, wenn die Option "ändern" im Zielwahl-Menü angetippt worden ist. Die Menüpunkte im Randbereich 9 haben sich dynamisch geändert. Wiederum werden nur die unter den vorliegenden Umständen zur Verfügung stehenden Funktionen angezeigt. Das Symbol für "ändern" ist jetzt beispielsweise im Feld 12.1 angezeigt und zwar mit einer Hervorhebung. Im Feld 12.2 ist die "OK-Taste" zum Bestätigen vorgesehen.

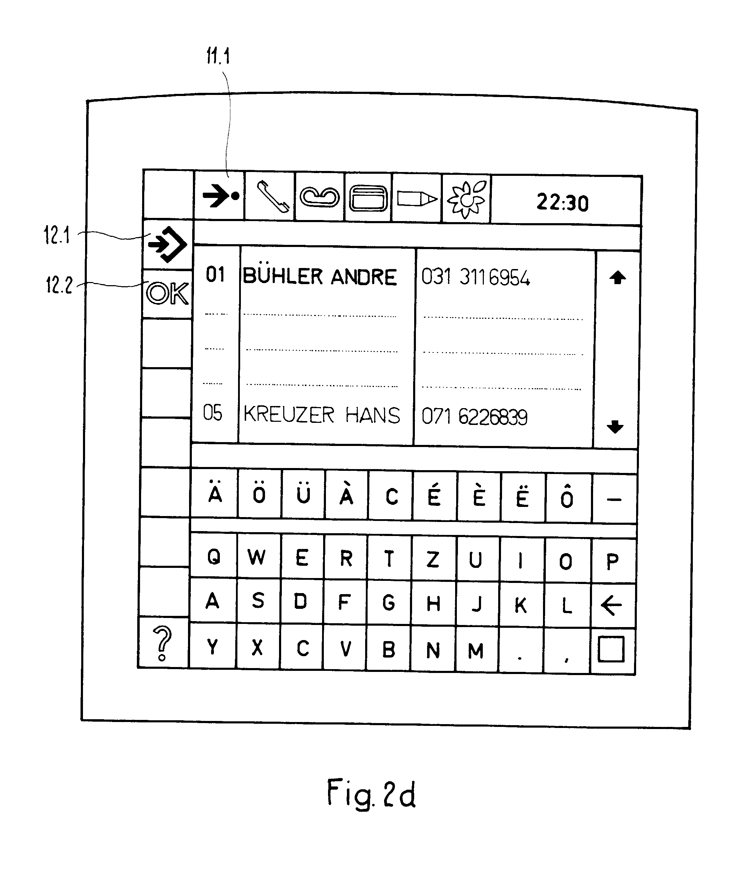

Die Arbeitsfläche ist in zwei Hälften 10.1 und 10.2 unterteilt. In der oberen Hälfte 10.1 ist das Telefonregister dargestellt und zwar so, wie in Fig. 2b gezeigt. In der unteren Hälfte 10.2 ist ein Feld-Raster angeordnet. Berührt der Benutzer die Spalte 15.3, dann erscheinen in der unteren Hälfte 10.2 automatisch die zehn Ziffern 0 bis 9. Zur Änderung der bestehenden Nummer wird einfach die neue eingetippt. Berührt der Benutzer dagegen einen Namen in der Spalte 15.2, dann erscheint in der unteren Hälfte 10.2 eine alphabetische Tastatur (vgl. Fig. 2d). Ein bestehender Name kann geändert bzw. ein neuer eingefügt werden.

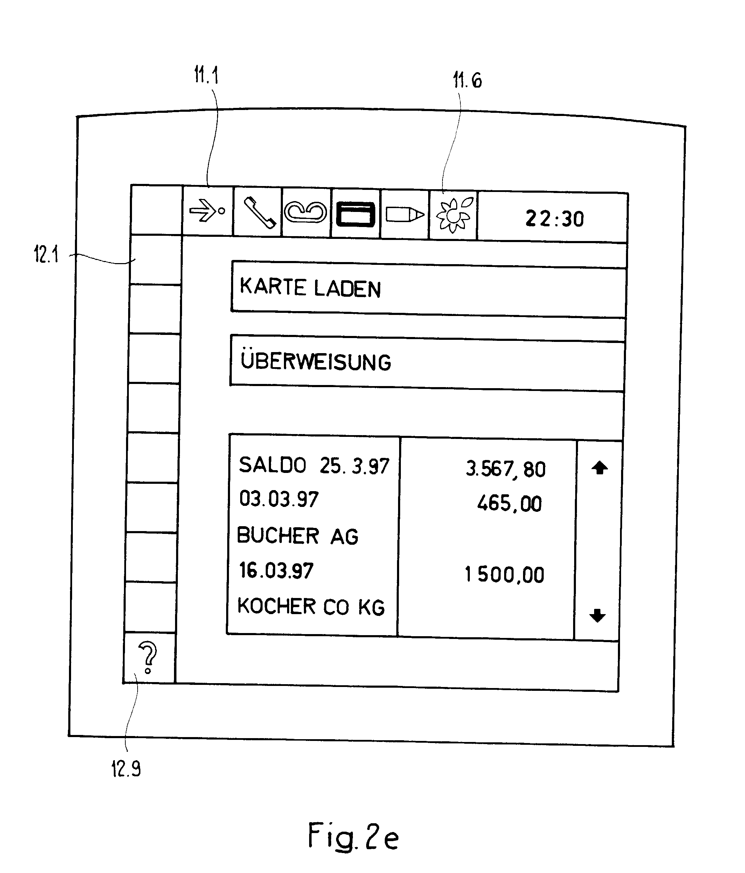

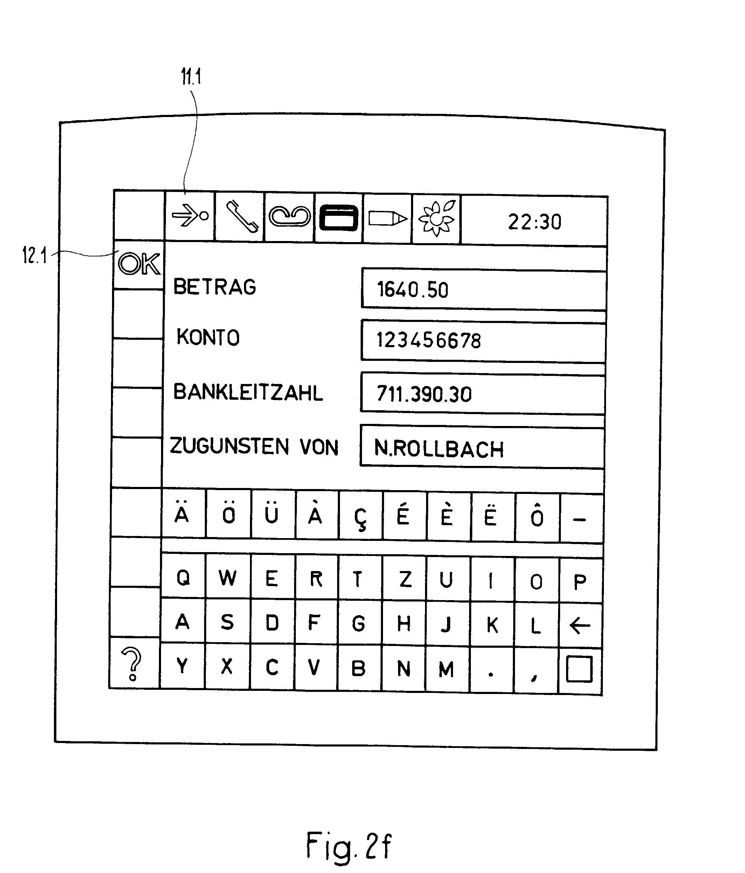

In den Figuren 2e und 2f sind zwei mögliche Oberflächen für den Menüpunkt "Bankdienstleistungen" dargestellt. Der Benutzer kann z.B. seine Barzahlungskarte aufladen (Fig. 2e) oder eine Überweisung veranlassen (Fig. 2f). Es versteht sich, dass das Gehäuse des Telefons in diesem Fall einen Schlitz zum Einführen bzw. Einlesen einer entsprechenden Chipkarte haben muss. (Dieser Schlitz bzw. Kartenaufnahmeraum könnte z.B. an der rechten Längsseite des in Fig. 1 gezeigten Gerätes ausgebildet sein.) Ferner wird ein Verfahren zur Identifikation des Benutzers durchzuführen sein, bevor die Bankdienstleistungen in Anspruch genommen werden können. Zu beachten ist, dass in Fig. 2f wiederum eine Zweiteilung der Arbeitsfläche vorhanden ist.

Im Vergleich der Beispiele der Figuren 2a bis 2f zeigt sich, dass die geometrische Aufteilung der Bildschirmfläche relativ statisch ist, dass aber der zweite Randbereich 9 und die Arbeitsfläche 10 inhaltlich variieren. Der Inhalt des zweiten Randbereiches 9 hängt dynamisch von demjenigen des ersten ab. Es ist aber auch möglich, dass die Felder des zweiten Randbereiches 9 in Abhängigkeit von einer vorangegangenen Wahl eines Menüpunktes in eben diesem zweiten Randbereich 9 ändern (vgl. dazu Fig. 2b und 2c). Die grösste Variabilität hat schliesslich die Arbeitsfläche. Sie zeigt die Funktionen an bzw. initiiert deren Ausführung.

Wenn der Benutzer die Taste 12.9 (Hilfetaste) berührt bzw. drückt, wird im Bereich der Arbeitsfläche 10 ein Fenster 18 eingeblendet. Dieses enthält zu jedem statischen und gegenwärtig angezeigten dynamischen Menüpunkt ein Hilfe-Feld 17.1 bis 17.11. In jedem Hilfe-Feld 17.1 bis 17.11 ist ein kurzer Text zur Erläuterung des Menüpunktes enthalten (z.B. "Wahl durch Eingabe der Telefonnummer", "Zielwahl durch Zugriff auf das persönliche Register", "Lautstärke einstellen" etc.). Gemäss der Erfindung werden alle Hilfe-Informationen zu den sichtbaren Menüpunkten gleichzeitig (d.h. auf einen Schlag) angezeigt. Wird die Taste 12.9 losgelassen, verschwindet das Fenster 18 sofort oder nach einer kurzen Wartezeit.

Es ist anzustreben, dass die grosse Arbeitsfläche 10 keine erklärungsbedürftigen Funktionen enthält, so dass für diesen Bereich keine Hilfe-Information erforderlich ist. Grundsätzlich ist es aber nicht ausgeschlossen, dass die erfindungsgemässe Hilfe-Funktion auch zur Erläuterung von Tasten und Funktionen im grossen zentralen Arbeitsbereich verwendet wird. Selbstverständlich ist in einem solchen Fall darauf zu achten, dass das Fenster 18 so klein wie möglich ist und nicht Bereiche abdeckt, welche für die Erhaltung der Übersicht hilfreich oder sogar wichtig sind.

Die Randbereiche ändern ihre Form in aller Regel nicht. Es soll aber nicht ausgeschlossen werden, dass unter bestimmten Umständen kleinere Verschiebungen oder Modifikationen auftreten bzw. bewusst erzeugt werden.

Das Telefonendgerät kann im Prinzip ohne eine einzige Hardwaretaste ausgeführt sein. Das Einschalten kann mit der ersten Berührung des Bildschirms erfolgen. Es ist auch möglich, einen Näherungssensor im Gerät einzubauen, welcher das Telefon einschaltet und das priorisierte Menü auf den Bildschirm bringt. Es ist aber auch nicht ausgeschlossen, dass zwei oder drei konventionelle Tasten vorhanden sind. Es liegt aber nicht im Rahmen der Erfindung, eine Zehnertastatur vorzusehen.

Die Erfindung wurde am Beispiel einer Tischstation erläutert. Sie ist aber in keiner Weise auf diese Anwendung beschränkt. Es können z.B. auch Wandapparate, Faxgeräte bzw. Multifunktionsgeräte mit einer erfindungsgemässen Bedienungsoberfläche ausgerüstet werden. Es sind sogar auch Anwendungen ausserhalb der Telekommunikation denkbar: Namentlich Verkaufsautomaten (wie z.B. Fahrkartenautomaten), welche für jedermann leicht bedienbar sein sollen, können mit einer Bedienungsoberfläche der beschriebenen Weise ausgestattet werden.

Zusammenfassend ist festzustellen, dass durch die Erfindung eine sehr einfache und übersichtliche Bedienung für Vorrichtungen aller Art, namentlich für Geräte im täglichen Gebrauch (z.B. Telefonendgeräte, Fahrkartenautomaten, Geldautomaten) geschaffen worden ist. Indem ferner die Bedienungsoberfläche allein mit dem berührungsempfindlichen Bildschirm verwirklicht wird, können unterschiedlich komfortable Geräte auf der Basis derselben Hardware angeboten werden. Der Komfort wird allein durch die Software bestimmt. Dies ist für den Hersteller eine wesentliche Kostenersparnis bei der Entwicklung und Herstellung ganzer Gerätefamilien.

## Patentansprüche

1. Vorrichtung, insbesondere Telefonendgerät, mit einem berührungsempfindlichen Bildschirm (7) für die Bedienung auf der Basis einer programmierten Menüstruktur, wobei der Bildschirm (7) mindestens einen fest vorgegebenen balkenförmigen Randbereich mit statischen oder dynamischen Menüpunkten aufweist, dadurch gekennzeichnet, dass beim Betätigen einer Hilfetaste im wesentlichen zu allen auf dem Bildschirm angezeigten statischen und dynamischen Menüpunkten gleichzeitig erläuternde Informationen angezeigt werden.

2. Vorrichtung nach Anspruch 1, dadurch gekennzeichnet, dass die erläuternden Informationen nur solange angezeigt werden, wie der Benutzer die Hilfetaste gedrückt hält.

3. Vorrichtung nach einem der Ansprüche 1 oder 2, dadurch gekennzeichnet, dass der Bildschirm in drei fest vorgegebene Bereiche (8, 9, 10) aufgeteilt ist, wobei ein erster balkenförmiger Randbereich (8) eine Mehrzahl von statischen Basis-Menüpunkten, ein zweiter balkenförmiger Randbereich (9) eine Mehrzahl von zu einem ausgewählten Basis-Menüpunkt untergeordneten dynamischen Menüpunkten und ein grossflächiger Arbeitsbereich (10) eine konkrete Eingabe-Funktion in Abhängigkeit von den statischen und dynamischen Menüpunkten enthält,

4. Vorrichtung nach einem der Ansprüche 1 bis 3, dadurch gekennzeichnet, dass der erste Randbereich (8) sich horizontal über den ganzen oberen oder unteren Rand des Bildschirms und der zweite Randbereich (9) sich vertikal über den linken oder rechten Rand erstreckt.

5. Vorrichtung nach einem der Ansprüche 1 bis 4, dadurch gekennzeichnet, dass die Randbereiche (8, 9) entsprechend einem fest vorgegebenen Raster in Felder (11.1 bis 11.6, 12.1 bis 12.9) unterteilt sind und dass nur die Beschriftung entsprechend der Funktion der Menüpunkte ändert, wobei nicht benötigte Felder (12.5 bis 12.8) unbeschriftet bleiben.

6. Vorrichtung nach einem der Ansprüche 1 bis 5, dadurch gekennzeichnet, dass die Randbereiche (8, 9) nur durch Symbole beschriftet werden und dass nur im Arbeitsbereich Klartext angezeigt wird.

7. Vorrichtung nach einem der Ansprüche 1 bis 6, dadurch gekennzeichnet, dass in den Randbereichen (8, 9) jeweils höchstens eine Reihe mit höchstens sieben Menüpunkten dargestellt ist.

8. Vorrichtung nach einem der Ansprüche 1 bis 7, dadurch gekennzeichnet, dass sie als Telefonendgerät ausgeführt ist und dass im ersten Randbereich die Felder mit folgenden Funktionen enthalten sind: Zielwahl, Nummernwahl, Telefonbeantworter, Bankdienstleistungen, Notizen, Einstellungen.

9. Vorrichtung nach Anspruch 8, dadurch gekennzeichnet, dass der Bildschirm (7) im wesentlichen die ganze Oberseite (3.2) des Gehäuses (3) einnimmt.

10. Vorrichtung nach einem der Ansprüche 1 bis 9, dadurch gekennzeichnet, dass es abgesehen von einer allfälligen Ein/Aus-Taste (6) oder dergleichen keine Hardwaretasten hat.
